Europäisches Patentamt

European Patent Office

Office européen des brevets

(11) Publication number: **0 137 571**
**B1**

# EUROPEAN PATENT SPECIFICATION

(45) Date of publication of patent specification: **31.05.89**

(51) Int. Cl.⁴: **G 01 N 21/05**

(21) Application number: **84201467.2**

(22) Date of filing: **11.10.84**

(54) flow cell.

(30) Priority: **13.10.83 NL 8303522**

(43) Date of publication of application:
**17.04.85 Bulletin 85/16**

(45) Publication of the grant of the patent:
**31.05.89 Bulletin 89/22**

(84) Designated Contracting States:
**DE FR GB NL**

(56) References cited:
**FR-A-2 305 715**
**US-A-3 307 447**
**US-A-3 822 947**
**US-A-4 152 073**

(73) Proprietor: **Vital Scientific N.V.**
**Kanaalweg 24**
**NL-6951 KL Dieren (NL)**

(72) Inventor: **Van der Steen, Gerard Aart**
**Prins Mauritsstraat 2**
**NL-6904 CT Zevenaar (NL)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to a flow cell as set forth in the first part of claim 1.

Such a flow cell is disclosed in FR—A—2,305,715. This known flow cell is provided with an air bubbles entrapping cavity arranged between the measuring chamber and a fluid inlet channel which tangentially intersects this cavity, and further with a collection cavity arranged between the measuring chamber and an outlet channel, both cavities being connected by a channel through which air bubbles can pass towards the outlet channel. The complicated construction of this known flow cell results in very high manufacturing costs.

The invention has for its object to provide a flow cell which does not possess the aforementioned drawback, whereas the occurrence of dead-corners is avoided. These dead-corners adversely effect the measurement, since on the one hand air bubbles and on the other hand sample fluid of the preceding sample may accumulate in these dead-corners, which may have an adverse effect on a further measurement.

In accordance with the invention this is achieved, in that the inlet and the outlet tangentially intersect the measuring chamber.

When the inlet and the outlet intersect the measuring chamber under an acute angle an optimum flow through the measuring space is obtained. When the acute angle is such that respective extensions of the inlet and outlet pass through the measuring chamber without intersecting the wall of the measuring chamber the flow cell can be manufactured in an advantageous manner, since in drilling the inlet and the outlet the drill can shoot out without touching and damaging the wall of the measuring chamber.

The above-mentioned and further features will be set out with reference to a few non-limitative embodiments of a flow cell in accordance with the invention shown in the accompanying drawing.

In the drawing show:

Figs. 1 and 3 each a perspective, fragmentary view an embodiment of a flow cell in accordance with the invention,

Figs. 2 and 4 each a sectional view taken on the line II—II and IV—IV respectively of the cell of Fig. 1 and Fig. 3 respectively.

Fig. 5 a detail of Fig. 1, and

Fig. 6 a measuring instrument provided with a flow cell embodying the invention in the position of use.

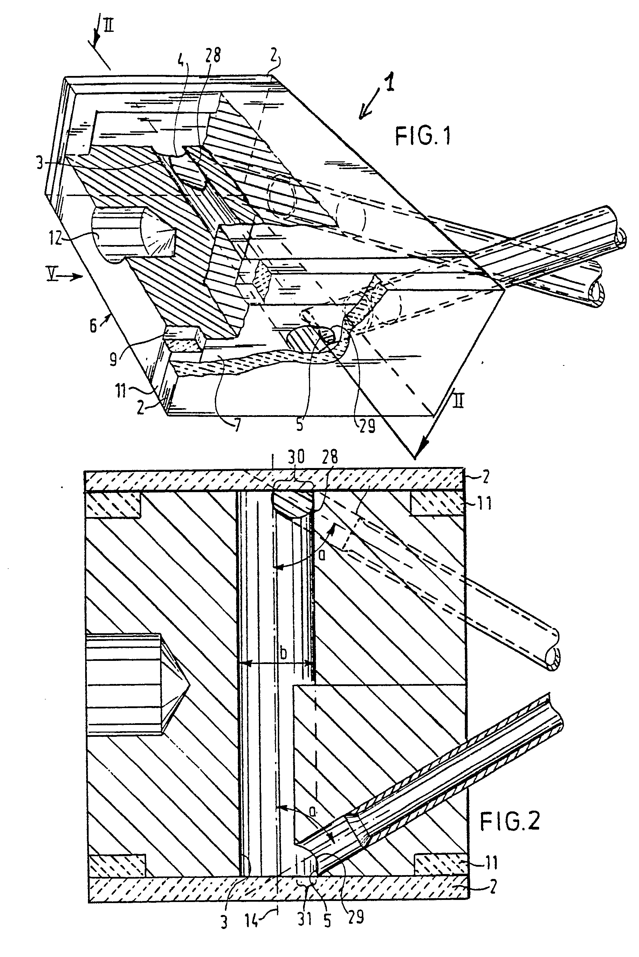

Fig. 1 shows a flow cell 1 embodying the invention having a measuring chamber 3 between two light-pervious walls 2, for example, quartz windows, in which open out an inlet 4 and an outlet 5. The measuring chamber 3 is round in cross-section, has a substantially cylindrical shape and is arranged with the inlet 4 and the outlet 5 in a block 6 of metal, preferably stainless steel. The inlet 4 debouches in the measuring chamber 3 via an aperture 28, and the outlet 5 via an aperture 29. The head sides 7 and 8 of the block 6 each have a circumferential groove 9, containing an adhesive 11, for example, Araldite, by which the windows 2 are fastened to the block 6. The flow cell 1 embodying the invention has furthermore a recess 12 for receiving a sensor 13, for example, a temperature sensor.

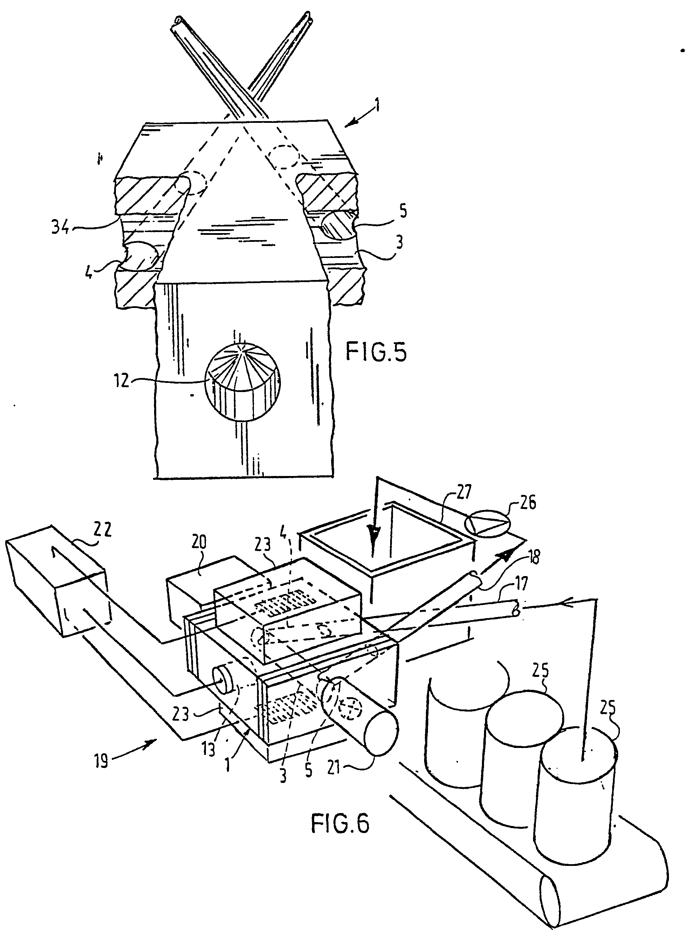

It will be apparent from Fig. 5, which shows the flow cell 1 according to the invention in the operational position, that the inlet 4 is located at a lower level than the outlet 5. Air bubbles penetrating through the inlet 4 into the measuring chamber 3 travel in accordance with the helical movement of the fluid stream through the measuring chamber 3 towards the outlet 5 and are removed from the measuring chamber 3 through the outlet 5.

Since the inlet 4 and the outlet 5 tangentially adjoin the measuring space, the fluid directly adheres to the inner surface of the measuring chamber 3 and is pushed by the helical movement towards the outlet 5.

As is shown in Fig. 2, both the inlet 4 and the outlet 5 are connected with the measuring chamber 3 in the vicinity of a light-pervious window 2, so that a part 30 of the inlet 4 and a part 31 of the outlet 5 is formed by the associated light-pervious wall 2. In this way dead corners between the inlet 4, the outlet 5 and the associated light-pervious window 2 are avoided.

Since on the one hand the inlet 4 and on the other hand the outlet 5 are at an acute angle to the central axis 14 of the measuring chamber 3, the inlet 4 and the outlet 5 can be very advantageously formed, because the angle *a* is chosen so that on drilling the inlet 4 and the outlet 5 the drill used cannot touch the opposite part of the measuring chamber 3. The angle *a* depends *inter alia* on the dimension *b* of the measuring chamber 3 and the diameter of the inlet 4 and the outlet 5 respectively and with a circular diameter of about 2 mm and a diameter of the inlet 4 and the outlet 5 of 1 mm it is about 60°.

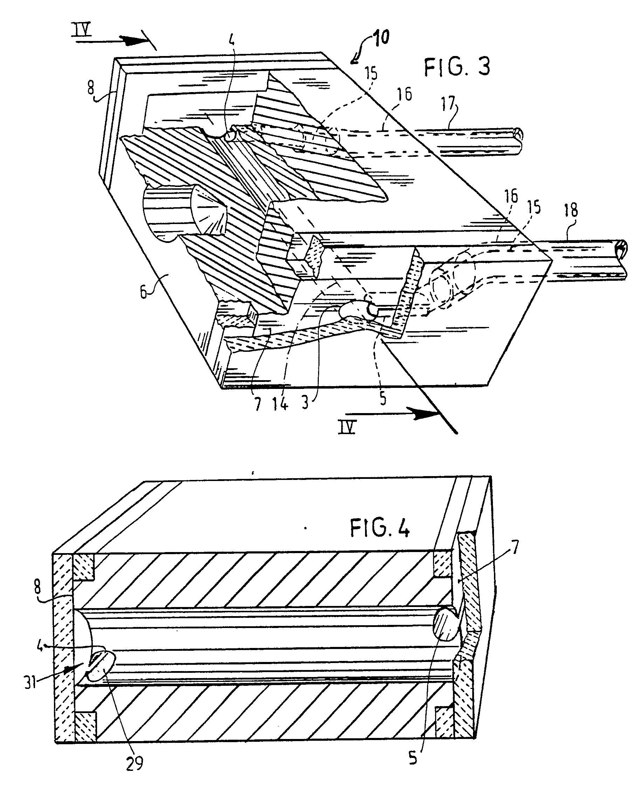

Figs. 3 and 4 show a flow cell embodying the invention in which the inlet 4 and the outlet 5 again debouches tangentially in the measuring chamber 3, the inlet 4 being located at a lower level than the outlet 5 when flow cell 10 is in the operational position as shown in Fig. 4. In the flow cell 10 according to the invention both the inlet 4 and the outlet 5 are at right angles to the axis 14 of the measuring space 3. Still are dead corners between these head sides 8 and 7 and the inlet 4 and the outlet 5 respectively, avoided, because as shown the part 31 of the inlet 4 is formed by the associated light-pervious wall 2.

Fig. 3 illustrates that on forming the inlet 4 and the outlet 5 a primary bore 15 is made in the block 6, and then a coaxial bore 16 is made in which subsequently a duct 17 and 18 respectively adjoining the inlet 4 and the outlet 5 are fastened.

Fig. 6 shows a device 19 in which the flow cell 1 according to the invention is arranged. It will be apparent from Fig. 6 that in the operational position of the flow cell 1, 10 according to the invention the inlet 4 and the outlet 5 both lie in a substantially horizontal plane. The flow cell 1 is located between a light source 20 and a detector 21, with the measuring chamber 3 in the path of the light. The recess 12 holds a sensor 13 connected to a control unit 22 by means of the elements 23 with which, for example, the temperature of the block of the flow cell 1 can be controlled and set. Via the inlet duct 17 sample fluid 24 from sample holders 25 is introduced by the suction effect of a fluid pump 26 arranged in the outlet duct 18, into the measuring chamber 3. When a sample fluid is introduced from another sample holder 25, the sample fluid in the measuring chamber 3 that is already measured, is transferred via the outlet 5 and the outlet duct 18 into a holder 27. Because the inlet 4 is arranged at a lower level than the outlet 5, air bubbles that reached the measuring chamber 3 will be removed in a simple manner, whilst owing to the tangential connection of the inlet 4 and the outlet 5 and to the acute angle thereof to the axis 14 substantially coinciding with the path of the light from the light source 20, a flow cell 1, 10 is obtained in which contamination is avoided as much as possible and the measuring volume of the flow cell with a diameter of 2 mm and a path of light of 1 cm can only be 31 microlitres.

**Claims**

1. A flow cell (1, 10) comprising a cylindrical measuring chamber (3) having a central axis (14) and extending between two light-pervious walls (2), an inlet (4) and an outlet (5) both intersecting the measuring chamber (3) at respective ends thereof such that in the position of use of the flow cell (1, 10) the inlet (4) is located at a lower level than the outlet (5) and at the locations where the inlet and the outlet intersect the measuring chamber a part of the inner wall of the inlet (4) and the outlet (5) being formed by the associated light-pervious wall (2), characterized in that the inlet (4) and the outlet (5) tangentially intersect the measuring chamber (3).

2. A flow cell (1) as claimed in claim 1, characterized in that the inlet (4) and the outlet (5) intersect the measuring chamber (3) under an acute angle (a) with said central axis (4).

3. A flow cell (1) as claimed in claim 2 characterized in that the acute angle (1) is such that respective extensions of the inlet (4) and outlet (5) pass through the measuring chamber (3) without intersecting the wall of the measuring chamber (3).

**Patentansprüche**

1. Strömungszelle (1, 10) mit einer zylinderförmigen Meßkammer (3), die eine Mittelachse (14) aufweist und sich zwischen zwei lichtdurchlässigen Wänden (2) erstreckt, mit einem Einlaß (4) und einem Auslaß (5), die beide die Meßkammer (3) an den jeweiligen Enden derselben so schneiden, daß in Benutzungstellung der Strömungszelle (1, 10) der Einlaß (4) in einer geringeren Höhe als der Auslaß (5) angeordnet ist und an den Stellen, wo der Einlaß und der Auslaß die Meßkammer schneiden, ein Teil der Innenwand des Einlasses (4) und des Auslasses (5) durch die zugeordnete lichtdurchlässige Wand (2) gebildet wird, dadurch gekennzeichnet, daß der Einlaß (4) und der Auslaß (5) die Meßkammer (3) tangential schneiden.

2. Strömungszelle (1) nach Anspruch 1, dadurch gekennzeichnet, daß der Einlaß (4) und der Auslaß (5) die Meßkammer (3) unter spitzem Winkel (a) mit der Mittelachse (14) schneiden.

3. Strömungszelle (1) nach Anspruch 2, dadurch gekennzeichnet, daß der spitze Winkel (a) so gewählt ist, daß verschiedene Ausmaße des Einlasses (4) und des Auslasses (5) durch die Meßkammer (3) hindurchgehen, ohne die Wand der Meßkammer (3) zu schneiden.

**Revendications**

1. Cellule d'écoulement (1, 10) comprenant une chambre de mesure cylindrique (3) présentant un axe central (14) et s'étendant entre deux parois perméables à la lumière (2), une entrée (4) et une sortie (5) qui coupent toutes deux la chambre de mesure (3) aux extrémités respectives de cette chambre, de telle manière que, dans la position d'utilisation de la cellule d'écoulement (1, 10), l'entrée (4) soit placée à un niveau inférieur à celui de la sortie (5), et aux endroits où l'entrée et la sortie coupent la chambre de mesure, une partie de la paroi interne de l'entrée (4) et de la sortie (5) est formée par la paroi perméable à la lumière (2) qui lui est associée, caractérisée en ce que l'entrée (4) et la sortie (5) coupent tangentiellement la chambre de mesure (3).

2. Cellule d'écoulement (1) selon la revendication 1, caractérisée en ce que l'entrée (4) et la sortie (5) coupent la chambre de mesure (3) en formant un angle aigu (a) avec ledit axe central (14).

3. Cellule d'écoulement (1) selon la revendication 2, caractérisé en ce que l'angle aigu (a) est tel que les prolongements respectifs de l'entrée (4) et de la sortie (5) traversent la chambre de mesure (3) sans couper la paroi de la chambre de mesure (3).

EP 0 137 571 B1

FIG.1

FIG.2

1

FIG. 3

FIG. 4

FIG.5

FIG.6